# FASCICULE DE BREVET EUROPEEN

(11) **EP 0 691 155 B1**
(45) Date de publication et mention de la délivrance du brevet: **03.11.1999**
(21) Numéro de dépôt: 95401532.7
(22) Date de dépôt: 27.06.1995
(51) Int. Cl.: B01D 53/14

(54) **Procédé de désacidification d'un gaz pour production de gaz acides concentrés**
Verfahren zur Entsäuerung eines Gases um konzentrierte, saure Gase herzustellen
Method for gas deacidification in order to produce concentrated acid gases

(30) Priorité: 08.07.1994 FR 9408501
(43) Date de publication de la demande: 10.01.1996
(73) Titulaire: INSTITUT FRANCAIS DU PETROLE, 92500 Rueil Malmaison (FR)
(72) Inventeur: Collin, Jean-Claude, F-78540 Marsinval-Verneuil (FR); Larue, Joseph, F-78240 Chambourcy (FR); Rojey, Alexandre, F-92500 Rueil Malmaison (FR)

(56) Documents cités:
- EP-A- 0 375 077
- EP-A- 0 528 709
- FR-A- 2 507 499
- FR-A- 2 636 857
- US-A- 4 289 738

## Description

La présente invention a pour but de traiter un gaz, notamment un gaz naturel dans le but de le débarrasser au moins en partie des gaz acides qu'il contient et de produire au moins un gaz acide concentré.

Le procédé selon l'invention s'applique particulièrement bien à la désacidification d'un gaz naturel et de ses condensats pour produire des gaz acides concentrés.

Les brevets français FR-A-2.605.241 et FR-A-2.636.857 décrivent des procédés de traitement utilisant un solvant physique refrigéré permettant de réaliser les différentes étapes de traitement d'un gaz, dont la désacidification et l'élimination de l'eau.

Ces procédés présentent des avantages par rapport aux techniques antérieures notamment la possibilité d'utiliser le même solvant polaire pour la déshydratation et la désacidification du gaz ainsi que la possibilité de régénérer le solvant par mise en contact direct du solvant avec le gaz à traiter (brevet FR-A-2.605.241), conduisant à des gains importants en consommation d'énergie, investissement et encombrement de l'installation.

Néanmoins, pour des gaz renfermant des hydrocarbures, il se produit au cours de l'étape de désacidification une coabsorption d'une fraction d'hydrocarbure dans le solvant qui rend ainsi d'une part difficile la production des gaz acides concentrés ou leur traitement et plus particulièrement celui du sulfure d'hydrogène par exemple par réaction Claus, et d'autre part une perte de production de gaz.

Le brevet US-A-4.289.738 décrit un procédé ayant pour objectif de produire simultanément un flux de dioxyde de carbone CO₂ pratiquement pur, et un flux de gaz comportant des gaz acides qui se présentent dans des proportions contrôlées, rapport H₂S/CO₂, de manière à envoyer directement le gaz à une unité de traitement Claus. L'enseignement technique de ce document comprend l'utilisation d'une amine, solvant chimique, pour réaliser les étapes d'absorption, la mise en oeuvre de plusieurs étapes de régénération, et une étape de contrôle de la quantité de l'amine nécessaire pour obtenir un gaz dont la composition est approprié pour être envoyé à une unité Claus.

La présente invention pallie aux inconvénients de l'art antérieur en mettant en oeuvre une succession d'étapes d'absorption suivies d'étapes de régénération au cours desquelles le gaz est mis en contact avec un solvant physique polaire.

Avantageusement, la phase solvant issue de la seconde étape d'absorption est régénérée de façon plus poussée que la fraction de phase solvant issue de la première étape d'absorption.

De plus, les nouvelles réglementations concernant l'environnement étant de plus en plus sévères, la présente invention trouve avantageusement son application notamment pour éliminer les gaz acides et le sulfure d'hydrogène H₂S contenus dans des effluents gazeux.

Dans toute la suite de la description, on emploie indifféremment l'expression " zone de contact" ou l'expression "contacteur" pour désigner la partie du dispositif où l'on met en contact un fluide avec un solvant.

De même, l'expression phase solvant riche correspond à une phase solvant enrichie en gaz acides et phase solvant pauvre une phase solvant appauvrie en gaz acides au cours du procédé.

La présente invention concerne un procédé de traitement d'un gaz contenant au moins un hydrocarbure et au moins un gaz acide dans le but de débarrasser au moins en partie le gaz du gaz acide et de produire au moins un gaz acide concentré, tel que défini à la revendication 1, avec tout mode préféré tel que défini dans les revendications dépendantes.

Le deuxième mélange de phase solvant peut comporter le même solvant polaire que celui contenu dans le premier mélange utilisé au cours de l'étape (a).

La teneur en eau de ladite seconde fraction de phase solvant peut être au moins égale à la teneur en eau de ladite première fraction de phase solvant.

L'étape (b) est, par exemple, menée à une pression intermédiaire entre la pression à laquelle est menée l'étape (a) et la pression à laquelle est menée l'étape (d).

On peut régénérer la seconde fraction de phase solvant au cours de l'étape (d) est réalisée par simple détente à une pression inférieure à la pression à laquelle est effectuée l'étape (c).

On régénère, par exemple, la première et/ou la seconde fraction de phase solvant par un procédé de distillation à une pression inférieure à la pression à laquelle est effectuée l'étape (c).

La régénération de l'une des fraction de phase solvant peut être réalisée par distillation avec échange simultané de chaleur entre ladite fraction de phase solvant qui est chauffée progressivement et la phase solvant issue de ladite régénération, qui est refroidie en circulant à contre courant de la phase solvant qui est régénérée.

La seconde fraction de phase solvant à l'issue de l'étape (c) peut être soumise à une étape de régénération intermédiaire par détente en produisant une phase gazeuse riche en hydrocarbures au cours de l'étape (c), avant d'être envoyée à l'étape (d).

La première fraction de phase solvant à l'issue de l'étape (a) peut être soumise à une étape de régénération à une pression intermédiaire entre la pression à laquelle est menée l'étape (a) et la pression à laquelle est menée l'étape (b) en produisant une fraction gazeuse riche en hydrocarbures.

Les première et seconde fractions gazeuses issues respectivement de l'étape (c) et de l'étape (b) peuvent être comprimées et recyclées à l'étape (a).

La fraction gazeuse issue de l'étape (b) peut être comprimée avant d'être envoyée à l'étape (c).

Le gaz traité peut comporter au moins un gaz acide choisi parmi le dioxyde de carbone, I'hydrogène sulfuré.

Le gaz traité contient au moins du dioxyde de carbone et de l'hydrogène sulfuré et on maintient le débit de la seconde fraction de phase solvant à une valeur suffisamment élevée pour obtenir à l'issue de l'étape (c) une fraction gazeuse substantiellement débarrassée d'hydrogène sulfuré et suffisamment faible pour maintenir dans ladite fraction gazeuse une concentration relativement élevée de dioxyde de carbone, la fraction gazeuse issue de l'étape (d) étant concentrée en hydrogène sulfuré.

Le solvant polaire utilisé au cours des étapes (a) et (c) peut être choisi parmi le méthanol, un alcool ou un ether, un ether de polyéthylène glycol, du carbonate de propylène.

Le solvant polaire utilisé au cours des étapes (a) et (c) peut comprendre au moins deux solvants polaires.

Le solvant polaire utilisé au cours des étapes (a) et (c) peut comprendre un solvant polaire et une amine.

La teneur en eau de la première fraction de phase solvant peut être de préférence d'au moins 10% en fraction massique.

La teneur en eau de la seconde fraction de phase solvant peut être supérieure à la teneur en eau de la première fraction de phase solvant, et de préférence supérieure d'au moins 30%.

Le gaz naturel peut être réfrigéré en présence de solvant polaire avant d'être envoyé à l'étape (a) en produisant une phase gazeuse qui est envoyée à l'étape (a), une phase liquide riche en hydrocarbures et une phase liquide aqueuse riche en solvant.

L'eau peut être séparée du solvant polaire par contact à contre courant avec au moins une fraction de gaz traité.

Le gaz peut contenir au moins une fraction d'hydrocarbure liquide (GPL), ladite fraction étant envoyée à une étape de demethanisation par réduction de la pression et/ou élévation de température puis à une étape de deethanisation au cours de laquelle le méthane résiduel l'éthane ainsi que les gaz acides présents dans ladite phase hydrocarbure liquide sont au moins partiellement séparés.

L'étape (a) peut être réalisée à une pression comprise entre 1 et 20 MPa.

L'étape (a) peut être réalisée à une température comprise entre +5 et -50 Deg C.

L'étape (c) peut être réalisée à une pression comprise entre 0.4 et 2 MPa.

L'une au moins des fractions de mélange de phase solvant utilisées au cours des étapes (a) et (c) peut être régénérée par distillation avec échange de chaleur dans un échangeur à plaques verticales comportant une alternance de passages dans lesquels d'une part s'effectue le contact à contre-courant entre la phase liquide et la phase vapeur générée au cours du processus de distillation et d'autre part s'écoule la phase solvant issue de ladite régénération, qui est refroidie en circulant à contre-courant de la phase solvant en cours de régénération.

L'énergie de détente de l'une ou des deux fractions de mélange de phase solvant est transformée par l'intermédiaire d'une turbine en énergie mécanique.

L'invention et ses caractéristiques seront mieux comprises à la lecture de la description suivante, donnée uniquement à titre illustratif et non limitatif annexée des figures représentant respectivement :
- la figure 1 schématise le principe du procédé selon l'invention,
- les figures 2 à 4 décrivent des modes de réalisation pour lesquels les différentes étapes de régénération peuvent être améliorées,
- la figure 5 schématise un procédé permettant d'obtenir des gaz acides à très forte concentration,
- la figure 6 montre un exemple de réalisation on augmente l'appauvrissement du gaz en gaz acide,
- la figure 7 schématise un mode de réalisation permettant d'augmenter l'élimination des hydrocarbures coabsorbés,
- les figures 8 et 9 schématisent deux exemples de mise en oeuvre du procédé.

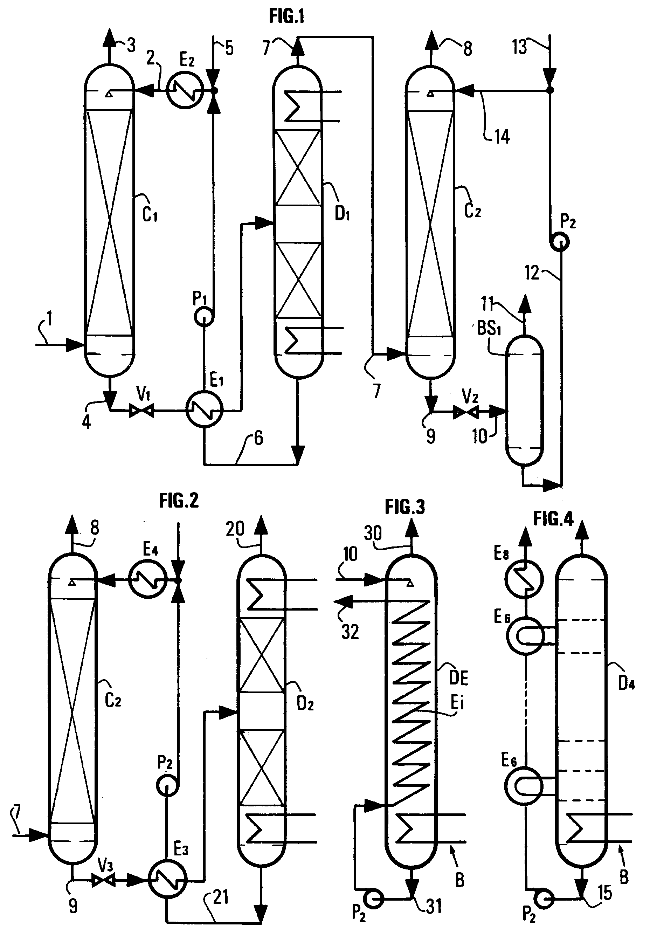

Le principe du procédé selon l'invention est décrit en relation avec le schéma de la figure 1 qui présente un exemple de réalisation d'un agencement de dispositif appliqué, par exemple, au traitement d'un gaz naturel pour le désacidifier et obtenir des gaz acides concentrés.

Le principe comprend au moins quatre étapes, a, b, c, d décrites ci-après.

Le gaz naturel à traiter, renfermant des gaz acides et au moins un hydrocarbure est préalablement refroidi et envoyé par le conduit 1 dans la zone de contact C₁ où il est mis en contact, étape (a), par exemple, à contre-courant avec un premier mélange de phase solvant et d'eau qui arrive par le conduit 2, le solvant comportant, par exemple, au moins un solvant polaire. Dans cette zone de contact C₁, il se produit une absorption sélective des gaz acides ainsi qu'une coabsorption d'une fraction des hydrocarbures contenus dans le gaz naturel.

On évacue dans la partie supérieure du contacteur C₁, par le conduit 3, une phase gazeuse appauvrie en gaz acides.

Dans la partie inférieure de la zone de contact ou contacteur C₁, on soutire, par le conduit 4, une première fraction de phase solvant chargée en gaz acides et en hydrocarbures dissous .

La première fraction de phase solvant issue de l'étape (a) est envoyée vers la zone de distillation D₁. Pour favoriser la vaporisation des gaz acides, on soumet au cours de l'étape (b) cette première fraction de phase solvant, par exemple à une détente à travers la vanne de détente V₁, et/ou à un chauffage ; ici elle est, par exemple, réchauffée dans l'échangeur E₁.

La phase solvant ainsi régénérée est soutirée au fond de la zone de distillation D₁ par le conduit 6.

Cette première fraction de phase solvant régénérée est renvoyée vers la zone de contact C₁. Pour cela, elle est reprise par la pompe P₁ de recyclage et envoyée dans l'échangeur E₁ dans lequel elle est refroidie, par exemple, par échange thermique avec la première fraction de phase solvant provenant de la vanne de détente V₁. Cette première phase solvant régénérée est ensuite mélangée, si nécessaire, à un appoint de solvant arrivant par le conduit 5 afin de compenser les pertes éventuelles en solvant dans le gaz désacidifié et également dans les gaz acides produits. Le mélange résultant est refroidi dans l'échangeur E₂ par un fluide auxiliaire de refroidissement externe, par exemple, et recyclé vers la zone de contact C₁ par le conduit 2.

En tête de la zone de distillation D₁, on évacue une phase vapeur riche en gaz acides contenant également des hydrocarbures dissous, par le conduit 7 vers le contacteur C₂ dans lequel, au cours de l'étape (c), elle est contactée, par exemple, à contre-courant avec un deuxième mélange de solvant et d'eau, arrivant par le conduit 14 ; le solvant comporte au moins un solvant physique polaire.

Le deuxième mélange de solvant et d'eau peut comporter le même solvant physique polaire que celui utilisé dans l'étape (a) et de l'eau, et avoir une teneur en eau au moins égale et, de préférence, supérieure à la teneur en eau de la fraction de phase solvant du premier mélange utilisé au cours de l'étape (a).

A la sortie du contacteur C₂, on évacue par le conduit 8 situé en tête, une phase gazeuse principalement enrichie en hydrocarbures.

En fond du contacteur C₂, on évacue par le conduit 9, une seconde fraction de phase solvant contenant les gaz acides absorbés, cette seconde fraction étant envoyée par le conduit 10 à un ballon séparateur BS₁ à travers la vanne de détente V₂ située entre les conduits 9 et 10, où elle subit une détente au cours de l'étape (d). Les gaz acides libérés à l'issue de cette étape de détente sont ensuite séparés dans le ballon séparateur BS₁.

En tête du ballon séparateur BS₁, on évacue par le conduit 11 une phase vapeur concentrée en gaz acides et en fond de ballon une seconde fraction de phase solvant régénérée par le conduit 12.

La seconde fraction régénérée est renvoyée vers le contacteur C₂. Elle est, pour cela, reprise par la pompe P₂ de recyclage et mélangée ensuite si nécessaire à un appoint de solvant arrivant par le conduit 13 pour compenser les pertes éventuelles de solvant, le mélange résultant de l'appoint est recyclé vers le contacteur C₂ par le conduit 14, par exemple en tête de contacteur.

Cet exemple de réalisation illustre les quatre étapes principales du procédé, qui comportent notamment une première étape (a) d'absorption, suivie d'une première étape de régénération (b) et une deuxième étape d'absorption (c), suivie d'une deuxième étape (d) de régénération.

La mise en contact du premier mélange de solvant et d'eau avec le gaz naturel à traiter au cours de l'étape (a) s'effectue, de préférence, à une température inférieure à la température ambiante.

L'étape de régénération (b) de la première fraction de phase solvant issue de l'étape (a) est réalisée, de préférence, à une pression intermédiaire entre la pression à laquelle est réalisée l'étape d'absorption (a) et la pression à laquelle est menée l'étape de régénération (d) de la deuxième fraction de phase solvant issue de l'étape (c) .

Pour certaines applications, il n'est pas nécessaire d'éliminer l'ensemble des gaz acides de la phase gazeuse enrichie en hydrocarbures issue de l'étape (c) d'absorption. Dans ces conditions, l'étape de régénération (d) de la deuxième fraction de phase solvant peut être réalisée par simple détente au travers d'une vanne à une pression inférieure à la pression d'absorption de l'étape (c).

Dans certains cas, par exemple dans le cas de traitement de gaz nécessitant un fort rendement au niveau de la production de gaz, il est important de produire à l'issue de l'étape (c) des hydrocarbures suffisamment débarrassés des gaz acides pour pouvoir être recyclés dans une chaîne de traitement située en aval ou être utilisés comme gaz combustible. Dans ces cas on régénère de manière poussée la seconde fraction de phase solvant issue de l'étape (c) pour permettre une meilleure efficacité de la seconde étape d'absorption. Des exemples de réalisation des étapes (c) et (d) sont décrits en rapport avec les figures 2 à 4.

L'appareil décrit en relation avec la figure 2 intègre, par rapport à la figure 1, une zone de distillation D₂ supplémentaire située après l'étape de détente de l'étape (c) précédemment décrite, les étapes (c) et (d) s'effectuant, par exemple de la manière suivante.

La seconde fraction de solvant issue de l'étape (c), et soutirée en fond de la zone de contact C₂ par le conduit 9 est envoyée dans la colonne à distiller D₂ au travers d'une vanne de détente V₃ et de l'échangeur E₃ où elle est tout d'abord détendue et réchauffée. Les gaz acides sont évacués dans la partie supérieure de la colonne D₂ par le conduit 20 alors que la seconde fraction de phase solvant régénérée est évacuée en fond de colonne D₂ par le conduit 21. Cette dernière est ensuite renvoyée dans le contacteur C₂ à travers l'échangeur E₃ dans lequel elle cède ses calories, la pompe de recyclage P₂, et l'échangeur E₄ dans lequel elle est refroidie.

La régénération de la seconde fraction de phase solvant issue de l'étape (c) s'effectue au cours de l'étape (d) dans cet exemple de réalisation par distillation, de préférence, à une pression inférieure à la pression à laquelle est effectuée l'étape (c).

La figure 3 illustre une variante de réalisation du dispositif comportant une colonne à distiller DE avec échangeur intégré Ei située par exemple à la place du ballon séparateur BS₁ (Fig. 1) ou après ce dernier, cette colonne permettant de régénérer l'une quelconque des fractions de phase solvant. Ce mode de réalisation permet, notamment, d'effectuer un échange simultané de chaleur entre la phase solvant pauvre en gaz acides régénérée et la phase solvant riche introduite dans la colonne à distiller.

La seconde fraction de phase solvant riche, issue de l'étape (c) est détendue par la vanne de détente V₂ (figure 1) et introduite à basse température, en tête de la colonne DE par le conduit 10. Elle circule dans la colonne DE à contre-courant de la vapeur générée par le bouilleur B de la colonne DE, s'appauvrissant ainsi en gaz acides dissous tout en se réchauffant par échange interne avec la phase solvant régénérée qui est soutirée de la colonne DE par le conduit 31, et reprise par la pompe P₂ pour être envoyée dans l'échangeur interne E La phase solvant régénérée échange ainsi de la chaleur à contre-courant avec la seconde fraction de phase solvant riche en gaz acides. On obtient ainsi une phase solvant purifiée et refroidie qui est évacuée en tête de la colonne DE par le conduit 32 et recyclée vers le contacteur C₂ pour effectuer l'étape (c).

Pour certaines applications, il est possible d'intégrer dans la partie supérieure de la colonne DE un condenseur non représenté sur la figure et/ou de placer un échangeur de refroidissement en sortie de l'échangeur intégré Ei.

Ce mode de réalisation permet de réaliser de 20 à 50% d'économie sur la dépense énergétique globale.

La régénération de la seconde fraction de phase solvant, effectuée au cours de l'étape (d), peut être réalisée par distillation avec échange simultané de chaleur entre ladite fraction de phase solvant qui est chauffée progressivement et la phase solvant issue de l'étape de régénération, qui est refroidie en circulant à contre courant de la phase solvant qui est régénérée.

L'échange interne de chaleur décrit précédemment entre la phase solvant riche en gaz acides et la phase solvant pauvre en gaz acides peut être réalisée au moyen de différents dispositifs.

L'échangeur intégré Ei peut être de type à tubes et calandre. Dans ce cas, la phase solvant régénérée et soutirée à la base de la colonne DE peut circuler à l'intérieur des tubes, la distillation étant effectuée à l'extérieur des tubes et à l'intérieur de la calandre.

La colonne DE peut être alors à plateaux, les tubes étant placés au dessus de chaque plateau, de manière à être noyés par la phase solvant riche à récupérer circulant sur chaque plateau.

La colonne DE peut être à contact continu, la phase solvant riche ruisselant alors sur les tubes.

La phase solvant régénérée soutirée à la base de la colonne DE peut également circuler à l'extérieur des tubes et à l'intérieur de la calandre. La distillation est alors effectuée à l'intérieur des tubes, qui sont de préférence verticaux et pourvus d'un garnissage interne.

On peut aussi utiliser un échangeur à plaques verticales. Les espaces entre les différentes plaques sont occupés alternativement par la phase solvant régénérée soutirée à la base de la colonne DE et par la phase solvant ainsi que la phase vapeur générée circulant à contre-courant dans la colonne au cours du processus de distillation. Il est, par exemple, de type échangeur en aluminium brasé ou de type échangeur en acier inoxydable, les plaques étant soudées soit bord à bord soit par diffusion métallique sur toute la surface de contact entre plaques.

Dans le schéma de la figure 4, un échangeur supplémentaire E₈ de refroidissement par fluide externe est positionné, par exemple, en fin de la série d'échangeurs. Il permet notamment de compenser les pertes thermiques et d'obtenir ainsi la température désirée pour la phase solvant pauvre. L'échange simultané de chaleur entre la phase solvant pauvre et la phase solvant riche s'effectue, par exemple de la manière suivante. La phase solvant pauvre ayant une température T sort en fond de colonne D₄ au niveau du bouilleur B par le conduit 15, elle est pompée par la pompe P₂ et envoyée dans un premier échangeur de chaleur E₆ dans lequel elle est refroidie par échange thermique avec la phase liquide issue d'un plateau de la colonne à distiller D₄ et circulant, soit par pompage, soit de manière gravitaire dans ledit échangeur E₆. La phase solvant pauvre ainsi prérefroidie est introduite dans un second échangeur E6 situé juste après le premier échangeur E6, et ainsi de suite à travers une succession d'échangeurs de type E6, jusqu'en tête de colonne.

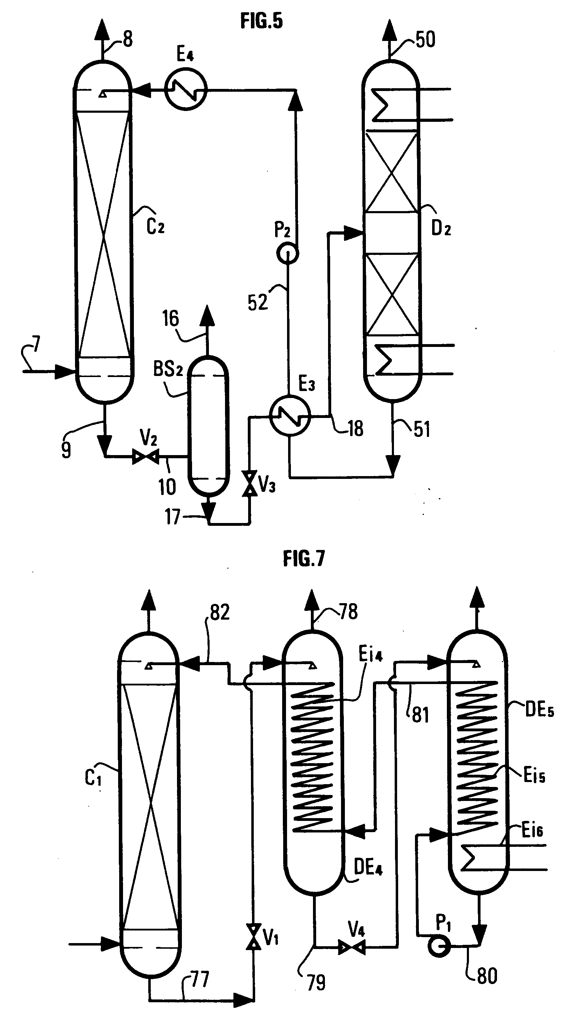

Le mode de réalisation décrit à la figure 5 est particulièrement bien adapté pour la production de gaz acides à très forte concentration. Cet exemple décrit un agencement particulier de moyens mis en oeuvre pour effectuer les étapes (c) et (d) de manière à diminuer la teneur en hydrocarbures des gaz acides produits à l'issue de l'étape (d), et obtenir une concentration plus élevée de gaz acides .

La seconde fraction de phase solvant enrichie en gaz acides à l'issue de la seconde étape d'absorption (c) et issue du contacteur C₂ est détendue au travers de la vanne V₂ à une pression, par exemple, intermédiaire entre la pression d'absorption de l'étape (c) et la pression à laquelle est réalisée l'étape (d), et pénètre dans le ballon séparateur BS₂ par le conduit 10.

On évacue en tête de ballon séparateur BS₂ par le conduit 16, la phase gazeuse ainsi produite entrainant la majorité des hydrocarbures coabsorbés.

La phase solvant, est soutirée en fond du ballon BS₂ par le conduit 17, puis détendue à travers la vanne V₃ et réchauffée ensuite dans l'échangeur E₃. La phase solvant détendue et réchauffée pénètre dans la colonne de distillation D₂ par le conduit 18. On soutire par le conduit 50 en tête de la colonne de distillation D₂ une phase vapeur très enrichie en gaz acide. Cette phase peut contenir, par exemple, moins de 1% d'hydrocarbures. La phase solvant régénérée sort en fond de la colonne D₂ par le conduit 51, envoyée dans l'échangeur E₃ où elle est prérefroidie, puis reprise par la pompe de recyclage P₂ et renvoyée par le conduit 52 vers l'échangeur E₄ dans lequel elle est refroidie, par exemple à l'aide d'un réfrigérant externe (non représenté sur la figure) et recyclée vers le contacteur C₂ afin de réaliser l'étape (c).

Dans d'autres cas, il est nécessaire de produire, à l'issue de l'étape de désacidification (a), un gaz très appauvri en gaz acides, par exemple ayant une teneur en gaz acides, inférieure à 3ppm en H₂S et/ou moins de 1% en CO₂. Dans ce cas, on régénère, par exemple, la première fraction de phase solvant issue de l'étape (a) de manière poussée. Il peut être avantageux de régénérer cette phase en effectuant au moins en partie l'étape (b) à une pression inférieure à la pression à laquelle est effectuée l'étape (c).

Une première façon d'opérer consiste à comprimer les gaz acides issus de l'étape (b) avant de les envoyer à l'étape (c).

Une seconde façon consiste, par exemple, à réaliser une première régénération de la première fraction de phase solvant à une pression permettant d'envoyer les gaz acides directement à l'étape (c). A l'issue de cette première régénération, la première phase solvant régénérée est pratiquement exempte d'hydrocarbures. Sa pureté en gaz acides peut néanmoins être insuffisante pour la recycler directement à l'étape (a). Dans ce cas, elle peut alors être envoyée à une deuxième étape de régénération opérant à une pression voisine de la pression à laquelle est opérée l'étape (d), les gaz acides issus de cette deuxième étape de régénération étant mélangés avec les gaz acides issus de l'étape (d).

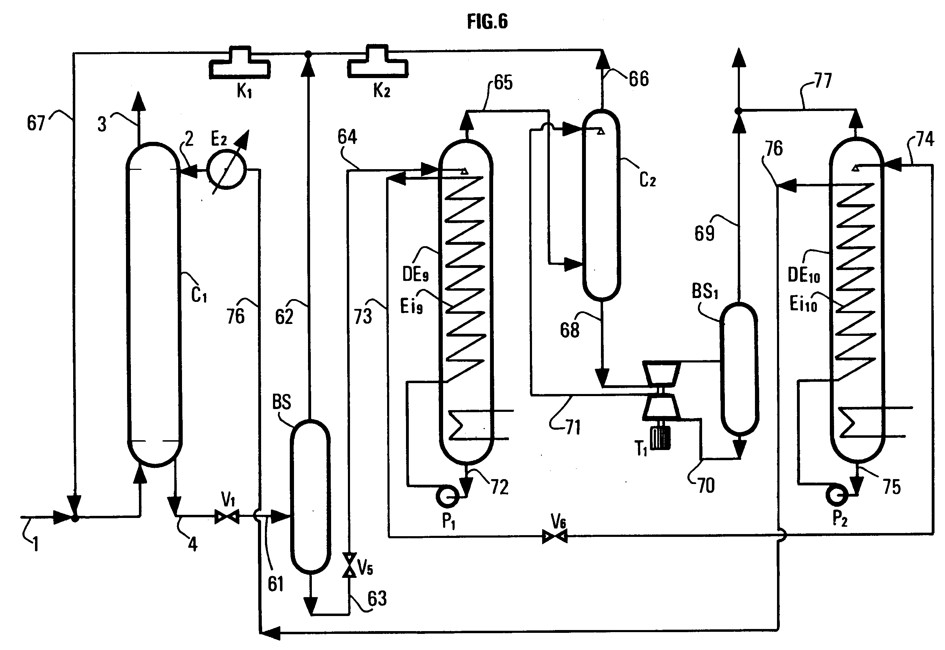

Cette seconde façon d'opérer est illustrée, par exemple, en relation avec le schéma de la figure 6 qui illustre un agencement particulier non limitatif d'un dispositif permettant d'obtenir ce résultat.

La première fraction de phase solvant issue de l'étape (a) est évacuée en fond de colonne d'absorption C₁ par le conduit 4, détendue au travers de la vanne de détente V₁ et envoyée par le conduit 61 dans le ballon séparateur BS.

On soutire en tête de ballon BS la phase vapeur ainsi générée riche en hydrocarbures et on l'envoie par le conduit 62, à un compresseur K₁ dans lequel elle est comprimée pour être ensuite recyclée vers le contacteur C₁ à l'étape (a).

La phase solvant riche en gaz acides est évacuée en fond du ballon BS par le conduit 63 et détendue à travers la vanne de détente V₅. Elle est ensuite envoyée par le conduit 64 dans la colonne de régénération DE₉ pourvue d'un échangeur de chaleur interne Ei9 permettant de réaliser simultanément un échange de chaleur entre la phase solvant riche en gaz acides et la phase solvant pauvre en gaz acides, de façon identique à la description mentionnée en relation aux figures 3 et 4.

La phase vapeur issue de la colonne de distillation DE₉ est une phase enrichie d'au moins une partie des gaz acides et de plus de 99% de l'ensemble initial des hydrocarbures dissous dans la phase solvant. Cette phase vapeur enrichie est évacuée en tête de colonne DE₉ par le conduit 65 sensiblement à la même pression vers le contacteur C₂ afin de réaliser l'étape d'absorption (c) décrite précédemment. En sortie de tête de contacteur C₂, on soutire une phase vapeur riche en hydrocarbures par le conduit 66 qui est comprimée par le compresseur K₂ à une pression, par exemple égale à la pression d'admission du compresseur K₁. La phase vapeur comprimée est ensuite mélangée avec la phase vapeur arrivant par le conduit 62, le mélange résultant étant comprimé par le compresseur K₁ puis recyclé en amont du contacteur C₁ (étape (a)) par le conduit 67.

La seconde fraction de phase solvant enrichie en gaz acides à l'issue de l'étape (c) est soutirée par le conduit 68 en fond du contacteur C₂ vers le ballon séparateur BS₁ au travers d'une turbine T₁ dans laquelle elle est détendue. En tête du ballon séparateur BS₁, la phase gazeuse est extraite par le conduit 69 et en fond de ballon la phase solvant régénérée est recyclée par le conduit 70 vers la turbine T₁ puis vers le contacteur C₂ par le conduit 71.

La phase solvant régénérée au moins en partie dans la colonne DE₉ au cours de l'étape (d) est évacuée en fond de colonne DE₉ par le conduit 72 et reprise par la pompe P₁. Elle est ainsi débarrassée pratiquement en totalité des hydrocarbures dissous. La teneur en gaz acides, notamment sa teneur en hydrogène sulfuré, est néanmoins trop élevée pour être recyclée directement vers le contacteur C₁ à l'étape (a). Afin de diminuer cette teneur en gaz acides, la phase solvant régénérée est refroidie dans l'échangeur de chaleur interne Eᵢ₉, évacuée, par exemple en tête de colonne de distillation DE₉ par le conduit 73 vers la vanne de détente V₆, au travers de laquelle elle est détendue à une pression supérieure ou égale à la pression de l'étape (d). La phase solvant partiellement régénérée refroidie et détendue, est ensuite injectée dans la colonne de distillation DE₁₀ par le conduit 74, la colonne pouvant être pourvue d'un échangeur interne Eᵢ₁₀. La phase solvant régénérée par passage dans la colonne DE₁₀ est évacuée en fond de colonne par le conduit 75, reprise par la pompe P₂ avant d'être réinjectée dans l'échangeur interne Eᵢ₁₀ où elle est refroidie, puis évacuée en tête de colonne par le conduit 76 pour être recyclée vers le contacteur C₁ vers l'étape (a).

La phase vapeur soutirée en tête de colonne DE₁₀ par le conduit 77 est composée essentiellement de gaz acides. Elle est mélangée aux gaz acides issus du séparateur BS₁ par le conduit 69, ces gaz acides résultant de la régénération de la seconde phase solvant réalisée dans la colonne BS₁ lors de l'étape (d).

Selon un mode préférentiel de l'invention, l'énergie mécanique de détente des différentes fractions de phases solvant peut être récupérée, par exemple, par l'intermédiaire d'une turbine de détente T₁. Cette récupération permet notamment de diminuer l'apport d'énergie mécanique nécessaire à l'entraînement des pompes de recyclage P₁ et P₂ des phases solvants vers les étapes (a) et (c). Ainsi, dans l'exemple illustrée sur la figure 6, I'énergie de détente utilisée pour régénérer la seconde fraction de phase solvant enrichie issue du contacteur C₂ permet d'entraîner au moins en partie la pompe de recyclage du solvant régénéré vers l'étape (c).

La récupération d'énergie mécanique par turbine de détente n'est pas limitée au cas faisant l'objet de l'exemple précédent mais peut être envisagée au cours d'une quelconque des étapes du procédé faisant intervenir une détente.

En limitant le débit de la phase solvant envoyé au contacteur C₂, on sépare de manière sélective l'H₂S du CO₂. Dans ce cas, la phase gazeuse évacuée en tête de colonne C₂ par le conduit 66 est riche en CO₂ et pauvre en H₂S, il contient, par exemple, moins de 2% de H₂S. Cet exemple montre que le procédé permet d'effectuer une désacidification sélective du gaz naturel, en séparant principalement l'hydrogène sulfuré H₂S du gaz naturel, le dioxyde de carbone CO₂ pouvant être recyclé en même temps qu'une partie des hydrocarbures coabsorbés.

Afin d'améliorer le bilan énergétique du procédé, plus particulièrement lors des étapes de refroidissement de la phase solvant, il est possible d'opérer la régénération de la première fraction de phase solvant effectuée au cours de l'étape (b) par une opération de distillation avec échange simultané de chaleur au cours de laquelle la fraction de phase solvant riche en gaz acides est chauffée progressivement en échangeant de la chaleur avec la phase de solvant pauvre qui, après régénération, se refroidit progressivement en circulant à contre-courant de la phase solvant riche. Cette opération de distillation avec échange de chaleur est réalisée, par exemple, selon des agencements similaires à ceux qui sont illustrés sur les figures 3 et 4.

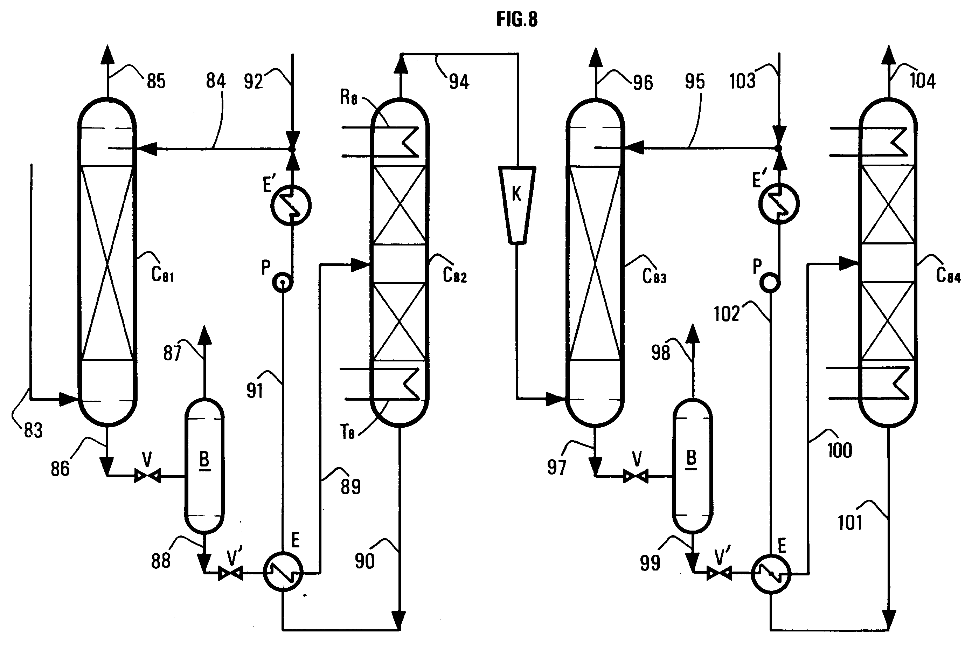

Lorsque l'on cherche à éliminer au moins en partie les hydrocarbures coabsorbés dans la première fraction de phase solvant, il est possible d'effectuer les étapes (a ) et (b) avec un dispositif schématisé en partie sur la figure 7.

La première étape de régénération s'effectue, par exemple, à une pression intermédiaire entre la pression à laquelle est menée l'étape d'absorption (a) et la pression finale de l'étape de distillation (b) en produisant une phase gazeuse particulièrement riche en hydrocarbures.

La première fraction de phase solvant riche en gaz acides issue en bas de colonne C₁ par le conduit 77 est détendue au travers de la vanne V₁ et introduite en tête de la colonne DE₄ à une température, par exemple, inférieure à la température de l'étape (a).

Elle descend le long de la colonne DE₄, en se réchauffant par échange interne à contre-courant avec une fraction de solvant pauvre provenant de la colonne DE₅ située après la colonne DE₄ de la façon décrite ci-après.

L'élévation de température de la phase solvant riche en gaz acides permet une vaporisation sélective des composés les plus légers et, plus particulièrement, des hydrocarbures et du C0₂. La phase vapeur ainsi générée par détente et élévation de température est issue en tête de la colonne DE₄ par le conduit 78 et entraîne la majorité des hydrocarbures coabsorbés.

La phase solvant riche en gaz acides et débarrassée au moins en partie des hydrocarbures dissous, est évacuée en fond de colonne DE₄ par le conduit 79, détendue à nouveau au travers de la vanne V₄ et envoyée en tête de la colonne à distiller DE₅, pourvue de l'échangeur interne Eᵢ₅, dans laquelle elle est régénérée par distillation avec échange simultané de chaleur avec la phase solvant pauvre en gaz acides sortant en fond de colonne DE₅ par le conduit 80, recyclée par la pompe P₁ et renvoyée dans l'échangeur interne Eᵢ₅. Un appoint de chaleur est fourni par l'échangeur Eᵢ₆ en fond de colonne DE₅.

La phase solvant pauvre refroidie après échange est évacuée dans la partie supérieure de la colonne DE₅ par le conduit 81 vers la colonne DE₄ où elle pénètre dans la partie inférieure de l'échangeur interne Eᵢ₄. Cette phase continue à se refroidir dans la colonne DE₄ en échangeant de la chaleur par circulation à contre-courant avec la phase solvant riche qui elle au contraire se réchauffe. La phase solvant pauvre et refroidie est évacuée dans la partie supérieure de la colonne DE₄ par le conduit 82 et recyclée à basse température en tête du contacteur C₁.

Dans certains cas, afin d'augmenter l'efficacité ou la pureté de la phase solvant pauvre, il est possible de placer en tête de colonne DE₅ un condenseur.

La fraction gazeuse obtenue à l'issue de la première étape de régénération de ladite première fraction de phase solvant, entrainant la majorité des hydrocarbures coabsorbés peut être soit utilisée comme gaz combustible sur le site, soit, afin d'augmenter la production de gaz traité, recomprimée et recyclée en amont de l'étape (a).

De façon similaire, il est possible de comprimer la phase gazeuse issue de l'étape (c) dite de lavage des gaz acides et de la recycler en amont de l'étape (a).

Il est également possible de comprimer la phase gazeuse riche en gaz acides issue de l'étape de distillation (b) avant de l'envoyer vers l'étape (c), afin d'améliorer l'efficacité de l'absorption des gaz acides dans la deuxième fraction de phase solvant.

Il est également possible de comprimer la phase gazeuse riche en hydrocarbures issue de la régénération réalisée à une pression intermédiaire entre la pression de l'étape (a) et la pression de l'étape (b) afin de la recycler en amont de l'étape (a). Cette possibilité permet d'augmenter le rendement du procédé au niveau de la production en hydrocarbures.

La présente invention sera mieux comprise à l'aide de deux exemples non limitatifs de traitement de gaz décrits ci-après.

L'exemple 1 décrit en relation avec la figure 8, permet d'obtenir à partir d'un gaz naturel, des gaz acides très concentrés et pratiquement exempts d'hydrocarbures.

Le gaz naturel à traiter a, par exemple, une composition donnée en % massiques suivante :

| | |
|---|---|
| EAU | 0.003 |
| METHANOL | 0.00 |
| AZOTE | 0.763 |
| DIOXYDE DE CARBONE | 5.305 |
| HYDROGENE SULFURE | 3.196 |
| METHANE | 71.052 |
| ETHANE | 11.649 |
| PROPANE | 5.671 |
| ISOBUTANE | 0.721 |
| BUTANE | 1.105 |
| ISOPENTANE | 0.238 |
| PENTANE | 0.192 |
| HEXANE | 0.070 |
| OCTANE | 0.035 |

Le gaz est préalablement refroidi à une température supérieure ou égale à sa température de rosée et a une température sensiblement voisine de -25 Deg C, une pression de 6.9 MPa, et est injecté dans le dipositif de traitement à un débit sensiblement égal à 17253 Kg/h.

Le gaz prérefroidi est envoyé par le conduit 83 au contacteur C₈₁ où il est mis en contact à contre-courant avec une première fraction de phase solvant injectée en tête de contacteur par le conduit 84. La première fraction de phase solvant est, par exemple composée d'un mélange de 85% poids de méthanol et de 15% poids d'eau, sa température est de -25 Deg C, et son débit d'injection dans le contacteur C₈₁ est de 25419 Kg/H. Le gaz au contact de la première phase solvant s'appauvrit en dioxyde de carbone et en hydrogène sulfuré en cédant également au moins une fraction d'hydrocarbures qui se trouve coabsorbée dans la première fraction de phase solvant.

Le gaz ainsi traité est évacué en tête du contacteur C₈₁ par le conduit 85 avec un débit sensiblement égal à 15316 Kg/h. Il possède une composition en gaz acides sensiblement voisine de 2.99 % massique pour le dioxyde de carbone et de 0.0007 % massique (3 ppm molaire) pour l'hydrogène sulfuré.

On soutire en fond de contacteur C₈₁ par le conduit 86 une fraction de phase solvant riche de 3.7% de gaz acides et de 3.4% d'hydrocarbures. Cette première fraction de phase solvant riche est envoyée à travers une vanne de détente V où elle est détendue à une pression sensiblement égale à 0.78 MPa vers un ballon flash B à une température voisine de -23 Deg C.

A l'issue du ballon séparateur B, une phase vapeur composée d'environ 18% de C02 et 6% d'H₂S et d'environ 76 % d'hydrocarbures dont 87% de méthane et d'éthane est évacuée en tête de ballon par le conduit 87, avec un débit par exemple égal à 792 Kg/h. Cette phase vapeur peut être utilisée comme fuel gaz, ou recomprimée et réinjectée en amont du contacteur C₈₁ par un dispositif approprié non représenté sur la figure.

La phase solvant riche en gaz acides séparée est évacuée en fond du ballon B par le conduit 88 à un débit, par exemple, de 26581 Kg/h. Elle est composée d'environ 14% H₂O, 81% MEOH, 3% de gaz acides, et 1.3% d'hydrocarbures. Elle est détendue au travers de la vanne V' à une pression, par exemple, de 0.76 MPa, et réchauffée ensuite dans l'échangeur, E. A la sortie de cet échangeur, elle possède une température d'environ 108 Deg C et pénètre par le conduit 89 dans la zone d'épuisement située sensiblement au milieu de la colonne à distiller C₈₂.

La phase solvant riche en gaz acides est régénérée à l'intérieur de la colonne C₈₂, par exemple, de la manière suivante; la tête de la colonne est refroidie à -5 Deg C, à l'aide d'un condenseur interne R₈ tandis que le fond est chauffé, par exemple, à 132 Deg C à l'aide d'un bouilleur T₈. La phase solvant régénérée, appelée également phase solvant pauvre, car appauvrie en gaz acides notamment, est soutirée de la colonne C₈₂ par le conduit 90; elle est ensuite prérefroidie dans l'échangeur de chaleur E par échange thermique avec la phase de solvant riche en gaz acides provenant du séparateur B. Elle sort de l'échangeur par le conduit 91 et reprise par une pompe P et envoyée vers un échangeur de chaleur E' où elle est refroidie jusqu'à une température, par exemple, de -25 Deg C. On utilise par exemple un fluide réfrigérant externe. Elle est recyclée après mélange avec un appoint arrivant par le conduit 92 vers la colonne C₈₁ par le conduit 84. L'appoint correspondant aux pertes de solvant dans le gaz traité est par exemple égal à 16 kg/h .

La phase gazeuse enrichie en gaz acide est soutirée en tête de colonne C₈₂ par le conduit 94. Sa température est d'environ -5 Deg C. Elle contient, par exemple, en % massiques 27.6% de CO₂, 42.7% H₂S, et 29.7% d'hydrocarbures. Elle est envoyée dans le contacteur C₈₃ à la même température et à une pression, par exemple de 0.75 MPa où elle mise en contact à contre-courant avec une deuxième fraction de phase solvant introduit dans la partie supérieure du contacteur C₈₃ par le conduit 95. Le débit de cette deuxième fraction de phase solvant est, par exemple, de 12000 Kg/h, et sa température sensiblement voisine ou égale à -5 Deg C ; elle peut comprendre, par exemple, 50% poids de méthanol et 50% poids d'eau.

En tête de colonne C₈₃, la phase vapeur enrichie en hydrocarbures sort par le conduit 96, avec un débit, par exemple, de 580Kg/h, sa composition massique étant de 56.3% d'hydrocarbures, 42% de CO₂ et 1.7% H₂S. Elle peut être recomprimée et recyclée en amont du procédé selon l'invention.

La deuxième fraction de phase solvant riche en gaz acides sort en fond du contacteur C₈₃ par le conduit 97. Elle est détendue au travers de la vanne V à une pression, par exemple, de 0.16 MPa, et envoyée dans le ballon séparateur B à une température de -3.2 Deg C.

A l'issue du ballon séparateur B, la phase vapeur riche en gaz acides résultant de la séparation sort en tête de ballon par le conduit 98. Cette phase possède une teneur en hydrocarbures inférieure, par exemple, à 5%.

En fond de ballon, on soutire une phase solvant ou phase liquide par le conduit 99. Afin de produire un gaz acide particulièrement concentré en H₂S, la phase solvant est détendue au travers de la vanne V', puis réchauffée dans l'échangeur E avant d'être envoyée par le conduit 100 vers la colonne à distiller C₈₄. Elle pénètre dans la zone d'épuisement de la colonne avec, par exemple, une température de 73 Deg C et une pression de 0.15 MPa. La tête de colonne C₈₄ est refroidie à -10 Deg C, le fond étant chauffé à 90.4 Deg C.

La phase solvant appauvrie en gaz acides pauvre, par exemple, sort de la colonne C₈₄ par le conduit 101 situé en fond de colonne, prérefroidie dans l'échangeur de chaleur E par échange thermique avec le solvant riche issu du ballon B. La phase solvant pauvre refroidie est reprise par la pompe P et envoyée par le conduit 111 vers l'échangeur E' où elle est refroidie à une température par exemple égale à -5 Deg C, et ensuite recyclée vers le contacteur C₈₃ après mélange avec un appoint de solvant de 4.1 Kg/h pénétrant par le conduit 103. Le refroidissement s'effectue par exemple à l'aide d'un fluide réfrigérant externe non représenté sur la figure. Le solvant servant à faire l'appoint peu être composé de 100% de méthanol correspondant aux pertes dans les deux phases vapeurs riches en gaz acides.

La phase gazeuse particulièrement concentrée en H₂S est extraite en tête de colonne C₈₄ par le conduit 104, son débit est de 195 Kg/h sa composition massique est de 94% H₂S, 5% CO₂, 1% d'hydrocarbures.

Pour un gaz traité contenant de l'hydrogène sulfuré l'H₂S et du dioxyde de carbone CO₂, il est possible de produire une phase gazeuse à l'issue de la seconde étape d'absorption (c) débarrassée au moins en partie de H₂S et suffisamment riche en CO₂ pour permettre de produire à l'issue de l'étape (d) une phase gazeuse particulièrement concentrée en H₂S.

Pour ce faire il est nécessaire de fixer le débit de la deuxième fraction de phase solvant à un niveau suffisamment élevé permettant d'absorber au moins en grande partie l'hydrogène sulfuré, tout en conservant un niveau suffisamment faible pour limiter l'absorption du dioxyde de carbone.

Dans le procédé selon l'invention les solvants utilisés sont physiques et polaires et miscibles en totalité ou au moins partiellement dans l'eau.

La teneur en eau de la première fraction de phase solvant est, de préférence, d'au moins 10% en fraction massique.

De façon à réduire la coabsorption d'hydrocarbures au cours de l'étape (c), il est préférable que la teneur en eau en fraction massique de la deuxième fraction de phase solvant soit supérieure à la teneur en eau en fraction massique de la première fraction de phase solvant, de préférence d'au moins 30%.

On peut utiliser pour effectuer les étapes d'absorption (a) et (c) un solvant identique ou différent ; Il peut comprendre du méthanol.

On peut aussi utiliser lors des deux étapes d'absorption (a) et (c) un solvant polaire comprenant un alcool autre que le méthanol, tel que par exemple l'éthanol, le 2-méthoxyéthanol, le propanol, le butanol, l'alcool propargylique ou également un éther qui peut être par exemple un ether de polyéthylène glycol.

Il est aussi possible d'utiliser des cétones telles que, par exemple, I'acétone ou la méthyléthylcétone ou encore des solvants de la famille des étherocycliques tels que par exemple le sulfolane, la pyridine, la N-méthylpyrolidone, le tétrahydrofurane, le furfural ...etc.

De façon générale d'autres solvants polaires tels que par exemple la diméthylformamide, la morpholine peuvent être utilisés. Dans le cas d'un gaz contenant du dioxyde de carbone le solvant polaire utilisé pour les deux étapes d'absorption (a) et/ou (c) peut contenir avantageusement du carbonate de propylène.

Afin d'améliorer l'absorption des gaz acides tout en diminuant la coabsorption des hydrocarbures légers le solvant utilisé peut comprendre un mélange d'au moins deux solvants polaires.

Le solvant utilisé pour les étapes (a) et/ou (c) du procédé peut également comprendre à la fois un solvant physique, par exemple un solvant polaire et un solvant chimique pouvant être par exemple une amine.

Le principe du procédé selon l'invention fait appel aux techniques de séparation par absorption réfrigérée dans un solvant polaire. De ce fait il est donc nécessaire de refroidir le gaz à traiter avant de l'introduire dans le procédé et notamment avant de le mettre en contact avec le solvant réfrigéré.

Lorsque le gaz à traiter est un gaz saturé en eau, il peut se produire durant la réfrigération, la formation d'hydrates. Afin d'éviter cette formation d'hydrates, le gaz naturel à traiter est réfrigéré, par exemple, en présence d'un solvant polaire avant d'être envoyé à l'étape de désacidification ou d'absorption (a), ce qui entraîne, dans le cas d'un gaz riche, la production d'une phase liquide riche en hydrocarbures, et d'une phase liquide aqueuse riche en solvant. Cette phase aqueuse riche en solvant est recyclée, mise en contact à contre courant avec le gaz ou une fraction du gaz à traiter afin de séparer l'eau du solvant et de saturer en partie le gaz avec le solvant afin d'éviter la formation d'hydrate pendant la phase de réfrigération.

Le brevet FR-2.605.241 décrit les avantages qui découlent de réaliser en une seule opération notamment les étapes suivantes : la déshydratation, la séparation de la phase liquide riche en hydrocarbures comprenant notamment une fraction GPL, et la régénération de la phase solvant.

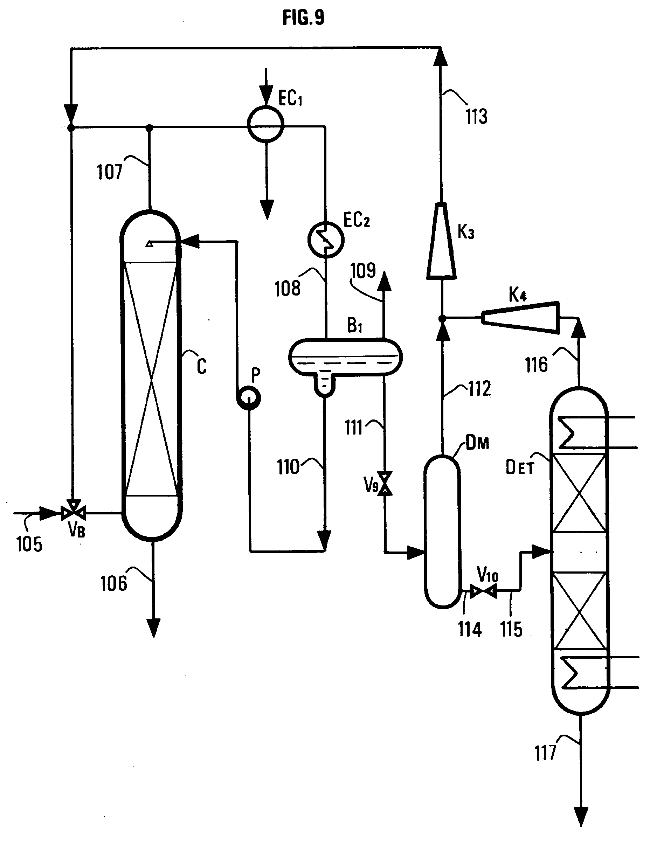

Un second exemple de mise en oeuvre du procédé selon l'invention décrit en relation avec la figure 9 permet d'éliminer au moins en partie le méthane, l'éthane ainsi que des gaz acides dissous du gaz naturel à traiter de manière à respecter les spécifications requises pour le transport ou le stockage de la fraction liquide du gaz naturel ou GPL .

Pour ce faire, et c'est là un autre objet de la présente invention, la fraction liquide ou GPL peut être envoyée à une première étape de déméthanisation par exemple effectuée par abaissement de la pression et/ou élévation de température, entrainant la formation d'une phase gazeuse riche en méthane, éliminée de la fraction GPL qui est ensuite envoyée à une seconde étape de dééthanisation au cours de laquelle, il a été découvert qu'au moins une grande partie du méthane résiduel, de l'éthane, ainsi que des gaz acides sont séparés des hydrocarbures autres que le méthane et l'éthane.

L'exemple décrit ci-après concerne le traitement du gaz naturel renfermant des hydrocarbures supérieurs associés, ainsi que des gaz acides constitués essentiellement d'hydrogène sulfuré H₂S et de dioxyde de carbone CO₂, sa composition donnée en % massique comporte, par exemple:

| | |
|---|---|
| EAU | 0.14 |
| AZOTE | 0.663 |
| DIOXYDE DE CARBONE | 3.934 |
| HYDROGENE SULFURE | 3.425 |
| METHANE | 64.881 |
| ETHANE | 12.032 |
| PROPANE | 7.182 |
| ISOBUTANE | 1.489 |
| BUTANE | 2.528 |
| ISOPENTANE | 0.837 |
| PENTANE | 0.802 |
| HEXANE | 0.708 |
| OCTANE | 1.380 |

On introduit le gaz à traiter, par exemple, à une température de 43 Deg C, une pression de 6.9 MPa, et un débit de 20.240T/h.

Le gaz qui est saturé en eau arrive par le conduit 105 et passe à travers une vanne ou by-pass V_{B}, de manière à envoyer environ 50% du débit dans le contacteur C, les autres 50 % étant by-passés. Les 50% de débit introduit dans le contacteur C sont contactés à contre courant avec une phase liquide formée, par exemple, d'un mélange de 65% poids de solvant tel du méthanol et 35% poids d'eau. Cette phase liquide est introduite avec un débit de 72.7 Kg/h, une pression sensiblement égale à 6.97 MPa, et à une température d'environ 43 deg C. Le débit de gaz naturel à traiter étant largement supérieur au débit de la phase liquide, le méthanol se trouve vaporisé et entraîné par la phase gazeuse (du gaz naturel) tandis que l'eau ainsi débarrassée de méthanol est recueillie en fond du contacteur C et sort par le conduit 106 avec un débit, par exemple de 28.1 Kg/h ; elle ne contient plus que 100 ppm massique de méthanol.

La phase gazeuse ainsi contactée est évacuée en tête du contacteur C par le conduit 107, mélangée d'une part à la partie de gaz by-passée et d'autre part à au moins une partie de gaz recyclés provenant des différentes étapes dudit procédé décrit ci-après. Ces parties sont prérefroidies dans l'échangeur EC₁, puis refroidies à une température de -25 Deg C dans l'échangeur de chaleur EC₂ par exemple à l'aide d'un fluide frigorigène, avant de pénétrer dans le ballon séparateur B₁ par le conduit 108.

Le refroidissement ainsi opéré permet de séparer dans ledit ballon, une fraction GPL riche en hydrocarbures contenant plus de 3 atomes de carbone, et également de séparer la majeure partie de l'eau et du méthane contenus dans la totalité du gaz arrivant à l'échangeur EC₁, et une phase gazeuse débarrassée en partie des hydrocarbures supérieurs à 2 atomes de carbone.

Cette phase gazeuse appauvrie en eau est évacuée par le conduit 109, et envoyée aux différentes étapes (a), (b), (c), (d) décrites précédemment.

La phase liquide formée de 65% poids de méthanol et de 35% poids d'eau, d'un débit de 72.7 Kg/h est évacuée du ballon B₁ par le conduit 110, pompée par la pompe P et recyclée vers le contacteur C. La quantité d'eau correspond, par exemple, à la quantité d'eau contenue dans le gaz avant la phase de déshydratation.

La fraction GPL obtenue dans le ballon B₁ est évacuée par le conduit 111, avec un débit de 3681 Kg/h, une température de - 25 Deg C, et une pression de 6.9 MPa. Sa composition massique est, par exemple, de:

| | |
|---|---|
| EAU | 0.0042 |
| METHANOL | 0.2787 |
| AZOTE | 0.1132 |
| DIOXYDE DE CARBONE | 3.211 |
| HYDROGENE SULFURE | 5.70 |
| METHANE | 26.97 |
| ETHANE | 16.835 |
| PROPANE | 16.494 |
| ISOBUTANE | 5.029 |
| BUTANE | 8.076 |
| ISOPENTANE | 3.481 |
| PENTANE | 3.487 |
| HEXANE | 2.898 |
| OCTANE | 7.417 |

Cette fraction GPL contenant des gaz acides, du méthane et de l'éthane est détendue au travers de la vanne V₉ à une pression de 3.25 MPa et envoyée dans le ballon déméthaniseur D_{M1}. En sortie de ballon déméthaniseur, la phase gazeuse enrichie à plus de 75% poids en méthane est évacuée par le conduit 112, recomprimée par le compresseur K₃, et recyclée par le conduit 113 en amont de l'échangeur EC₁. Son débit est, par exemple, de 744.5 Kg/h.

La phase liquide produite dans le ballon déméthaniseur est évacuée du ballon avec un débit de 2936.7 Kg/h par le conduit 114, détendue au travers de la vanne V₁ à une pression par exemple de 1.25 MPa et pénètre par le conduit 115 en tête de la colonne D_{ET} à une température, par exemple, de -62.5 Deg C.

Le bouilleur B de ladite colonne est, par exemple, chauffé à une température de 69. Deg C, la colonne peut comporter en tête pour certaines applications d'un condenseur. L'opération de dééthanisation ainsi réalisée permet de séparer en majeure partie comme il a été découvert les hydrocarbures inférieurs à 3 atomes de carbone et enrichis en gaz acides des hydrocarbures supérieurs.

La phase vapeur enrichie en gaz acides sort en tête de colonne par le conduit 116 à une température de -9 Deg C, son débit est de 1335 Kg/h, et contient en % poids plus de 20 % de gaz acides, 32% de méthane, 40 % éthane et seulement 7.5 % d'hydrocarbures supérieurs à 2 atomes de carbone. Cette dite phase vapeur est recomprimée par les compresseurs K₃ et K₄, et recyclée par le conduit 113 en amont de l'échangeur EC₁.

La phase liquide produite lors de l'étape de dééthanisation est évacuée en fond de la colonne D_{ET} par le conduit 117 avec un débit par exemple de 1601.6 Kg/h et une composition en % poids de :

| | |
|---|---|
| DIOXYDE DE CARBONE | 0.000 |
| HYDROGENE SULFURE | 0.002 |
| ETHANE | 0.0006 |
| PROPANE | 31.00 |
| ISOBUTANE | 11.00 |
| BUTANE | 17.85 |
| ISOPENTANE | 7.90 |
| PENTANE | 7.95 |
| HEXANE | 6.65 |
| OCTANE | 17.04 |

Cet exemple montre parfaitement comme il a été découvert la possibilité de produire des GPL désacidifiés et parfaitement stabilisés.

Le traitement d'un gaz naturel s'opère généralement à une pression imposée par les contraintes de production, qui peut notamment être égale à la pression de production du gisement du gaz naturel ou à la pression de transport par gazoduc par exemple . L'étape d'absorption (a) selon le procédé est généralement réalisée de préférence à une pression qui peut être comprise entre 1 et 20 MPa.

La température à laquelle est réalisée l'étape (a) se situe de préférence entre 5 et -50 Deg C.

La pression de la seconde étape d'absorption ou étape de lavage des gaz acides (c) est généralement fixée à une pression inférieure à la pression de la première étape (a) à un niveau suffisant pour permettre de recomprimer facilement la phase gazeuse riche en hydrocarbures issue de l'étape (c) afin de la recycler en amont du procédé. Cette pression est comprise de préférence entre 0.4 et 2 MPa.

Afin de diminuer de manière importante la dépense énergétique liée à la régénération de la phase gazeuse issue de l'étape (a) ou/et celle issue de l'étape (c), il peut être avantageux d'opérer l'étape de distillation en utilisant un échangeur à plaques verticales formant un réseau de canaux alternés, dans lequel on effectue simultanément un échange de chaleur et un transfert de matière.

L'échange de chaleur entre la phase solvant appauvrie qui circule de bas en haut d'une colonne en se refroidissant et la phase solvant riche qui circule de haut en bas tout en étant mis en contact à contre courant avec la phase vapeur générée, entraîne simultanément un transfert de matière entre les deux phases et un transfert de chaleur avec la phase solvant régénérée circulant dans les dits canaux adjacents.

Le procédé permet d'éliminer les gaz acides contenus dans un gaz naturel mais également ceux inclus dans un gaz de raffinerie ou dans tout effluent gazeux contenant simultanément des hydrocarbures et des gaz acides. Il permet d'éliminer des gaz acides tels que H₂S et CO₂ et également des mercaptans de formule chimique R-SH, de COS et de CS2.

Les différentes étapes du procédé selon l'invention peuvent être réalisées dans des colonnes munies de zone de contact permettant d'effectuer un transfert de matière entre les phases gazeuses et les phases liquides. Pour ce faire, ces zones de contacts peuvent être équipées de plateaux perforés, à cloches, à clapets ou dans des zones de contacts continus contenant un garnissage. Ce garnissage peut être constitué d'éléments en vrac tel que par exemple anneaux Raschig, anneaux Pall, selles de Berl connus de l'homme de métier. Il peut être également constitué de garnissage structuré formés par des toiles, des tricots, ou des toles pouvant être perforées ou munies de corrogations et/ou formant des canaux qui permettent d'accroître l'efficacité.

Ces plateaux ou ces garnissages peuvent être réalisés dans différents matériaux tels que céramique, aluminium, Inox, matière plastique.

On peut aussi utiliser des mélangeurs statiques, connus de l'homme de métier. Ces mélangeurs sont généralement constitués par un réseau de lames croisées qui permettent de créer un conduit intime entre la phase gazeuse et la phase liquide circulant à co-courant l'ensemble étant séparé en sortie dans un séparateur.

## Revendications

1. Procédé de traitement d'un gaz contenant au moins un hydrocarbure et au moins un gaz acide dans le but de débarrasser au moins en partie le gaz du gaz acide et de produire au moins un gaz acide concentré caractérisé en ce qu'il comprend au moins les étapes suivantes:
(a) on réfrigère et on contacte le gaz à une température inférieure ou égale à la température ambiante avec un premier mélange de phase solvant comprenant au moins un solvant physique polaire et de l'eau, de manière à obtenir une première fraction de phase solvant riche en gaz acides et contenant les hydrocarbures dissous et une fraction de gaz appauvri en gaz acides,
(b) on régénère la première fraction de phase solvant riche en gaz acides issue de l'étape (a) par abaissement de pression et/ou élévation de température en produisant une fraction gazeuse riche en gaz acides et contenant l'hydrocarbure et une phase solvant appauvrie en gaz acides recyclée vers l'étape (a),
(c) on contacte la fraction gazeuse riche en gaz acides issue de l'étape (b) avec un deuxième mélange de phase solvant différent du premier mélange utilisé dans l'étape a) comprenant au moins un solvant physique polaire et d'eau de manière à produire une fraction gazeuse enrichie en hydrocarbure et une deuxième fraction de phase solvant enrichie en gaz acides,
(d) on régénère ladite deuxième fraction de phase solvant enrichie en gaz acides issue de l'étape (c) par abaissement de pression et/ou élévation de température en produisant une fraction gazeuse plus concentrée en gaz acides que la fraction gazeuse séparée au cours de l'étape (b) et une fraction de phase solvant recyclée vers l'étape (c),
les étapes de régénération (b) et (d) étant réalisées dans des zones différentes.

2. Procédé de traitement selon la revendication 1 caractérisé en ce qu'on utilise un deuxième mélange de phase solvant comportant le même solvant polaire que celui contenu dans le premier mélange utilisé au cours de l'étape (a).

3. Procédé selon la revendication 1 caractérisé en ce que la teneur en eau de ladite seconde fraction de phase solvant est au moins égale à la teneur en eau de ladite première fraction de phase solvant.

4. Procédé selon l'une des revendications précédentes, caractérisé en ce que l'étape (b) est menée à une pression intermédiaire entre la pression à laquelle est menée l'étape (a) et la pression à laquelle est menée l'étape (d).

5. Procédé selon l'une des revendications précédentes, caractérisé en ce que l'on régénère la seconde fraction de phase solvant au cours de l'étape (d) par simple détente à une pression inférieure à la pression à laquelle est effectuée l'étape (c).

6. Procédé selon l'une des revendications précédentes, caractérisé en ce que l'on régénère la première et/ou la seconde fraction de phase solvant par un procédé de distillation à une pression inférieure à la pression à laquelle est effectuée l'étape (c).

7. Procédé selon la revendication 6, caractérisé en ce que la régénération de l'une des fractions de phase solvant est réalisée par distillation avec échange simultané de chaleur entre ladite fraction de phase solvant qui est chauffée progressivement et la phase solvant issue de ladite régénération, qui est refroidie en circulant à contre courant de la phase solvant qui est régénérée.

8. Procédé selon l'une des revendications précédentes, caractérisé en ce que la seconde fraction de phase solvant à l'issue de l'étape (c) est soumise à une étape de régénération intermédiaire par détente en produisant une phase gazeuse riche en hydrocarbures au cours de l'étape (c), avant d'être envoyée à l'étape (d).

9. Procédé selon l'une des revendications précédentes, caractérisé en ce que la première fraction de phase solvant à l'issue de l'étape (a) est soumise à une étape de régénération à une pression intermédiaire entre la pression à laquelle est menée l'étape (a) et la pression à laquelle est menée l'étape (b) en produisant une fraction gazeuse riche en hydrocarbures.

10. Procédé selon l'une des revendications précédentes, caractérisé en ce que les première et seconde fractions gazeuses issues respectivement de l'étape (c) et de l'étape (b) sont comprimées et recyclées à l'étape (a).

11. Procédé selon l'une des revendications précédentes, caractérisé en ce que la fraction gazeuse issue de l'étape (b) est comprimée avant d'être envoyée à l'étape (c).

12. Procédé de traitement selon l'une des revendications précédentes caractérisé en ce que le gaz traité comporte au moins un gaz acide choisi parmi le dioxyde de carbone, ou l'hydrogène sulfuré.

13. Procédé selon l'une des revendications précédentes, caractérisé en ce que le gaz traité contient au moins du dioxyde de carbone et de l'hydrogène sulfuré, et en ce qu'on maintient le débit de la seconde fraction de phase solvant à une valeur suffisamment élevée pour obtenir à l'issue de l'étape (c) une fraction gazeuse substantiellement débarrassée d'hydrogène sulfuré et, suffisamment faible pour maintenir dans ladite fraction gazeuse une concentration relativement élevée de dioxyde de carbone, la fraction gazeuse issue de l'étape (d) étant concentrée en hydrogène sulfuré.

14. Procédé selon l'une des revendications précédentes, caractérisé en ce que le solvant polaire utilisé au cours des étapes (a) et (c) est choisi parmi le méthanol, un alcool ou un ether, un ether de polyéthylène glycol, du carbonate de propylène.

15. Procédé selon l'une des revendications précédentes, caractérisé en ce que le solvant polaire utilisé au cours des étapes (a) et (c) comprend au moins deux solvants polaires.

16. Procédé selon l'une des revendications précédentes, caractérisé en ce que le solvant polaire utilisé au cours des étapes (a) et (c) comprend un solvant polaire et une amine.

17. Procédé selon l'une des revendications précédentes, caractérisé en ce que la teneur en eau de la première fraction de phase solvant est de préférence d'au moins 10% en fraction massique.

18. Procédé selon l'une des revendications précédentes, caractérisé en ce que la teneur en eau de la seconde fraction de phase solvant est supérieure à la teneur en eau de la première fraction de phase solvant, de préférence d'au moins 30%.

19. Procédé selon l'une des revendications précédentes, caractérisé en ce que le gaz est réfrigéré en présence de solvant polaire avant d'être envoyé à l'étape (a) en produisant une phase gazeuse qui est envoyée à l'étape (a), une phase liquide riche en hydrocarbures et une phase liquide aqueuse riche en solvant.

20. Procédé selon l'une des revendications précédentes, caractérisé en ce que l'eau est séparée du solvant polaire par contact à contre courant avec au moins une fraction de gaz traité.

21. Procédé selon l'une des revendications précédentes, caractérisé en ce que le gaz contient au moins une fraction d'hydrocarbure liquide (GPL), ladite fraction étant envoyée à une étape de demethanisation par réduction de la pression et/ou élévation de température puis à une étape de deethanisation au cours de laquelle le méthane résiduel l'éthane ainsi que les gaz acides présents dans ladite phase hydrocarbure liquide sont au moins partiellement séparés.

22. Procédé selon l'une des revendications précédentes, caractérisé en ce que l'étape (a) est réalisée à une pression comprise entre 1 et 20 MPa.

23. Procédé selon l'une des revendications précédentes, caractérisé en ce que l'étape (a) est réalisée à une température comprise entre +5 et -50 °C.

24. Procédé selon l'une des revendications précédentes, caractérisé en ce que l'étape (c) est réalisée à une pression comprise entre 0.4 et 2 MPa.

25. Procédé selon l'une des revendications précédentes, caractérisé en ce que l'une au moins des fractions de mélange de phase solvant utilisées au cours des étapes (a) et (c) est régénérée par distillation avec échange de chaleur dans un échangeur à plaques verticales comportant une alternance de passages dans lesquels d'une part s'effectue le contact à contre-courant entre la phase liquide et la phase vapeur générée au cours du processus de distillation et d'autre part s écoule la phase solvant issue de ladite régénération, qui est refroidie en circulant à contre-courant de la phase solvant en cours de régénération.

26. Procédé selon l'une des revendications précédentes, caractérisé en ce que l'énergie de détente de l'une ou des deux fractions de mélange de phase solvant est transformée par l'intermédiaire d'une turbine en énergie mécanique.

## Claims

1. A method of treating a gas containing at least one hydrocarbon and at least one acid gas with the aim of at least partially removing the acid gas from the gas and producing at least one concentrated acid gas, characterised in that it comprises at least the following steps:
(a) the gas is cooled and, at a temperature lower than or equal to ambient temperature, is brought into contact with a first mixture of solvent phase containing at least one physical polar solvent and water so as to obtain a first fraction of solvent phase which is rich in acid gases and contains the hydrocarbons in solution and a fraction of gas that is low in acid gases,
(b) the first fraction of solvent phase rich in acid gases obtained from step (a) is regenerated by reducing the pressure and/or raising the temperature, producing a gaseous fraction that is rich in acid gases and contains the hydrocarbon and a solvent phase that is low in acid gases which is recycled to step (a),
(c) the gaseous fraction rich in acid gases obtained from step (b) is brought into contact with a second mixture of solvent phase different from the first mixture used in step (a) containing at least one physical polar solvent and water so as to produce a gaseous fraction enriched with hydrocarbon and a second fraction of solvent phase enriched with acid gases,
(d) said second fraction of solvent phase enriched with acid gases obtained from step (c) is regenerated by reducing the pressure and/or raising the temperature producing a gaseous fraction with a concentration of acid gases higher than the gaseous fraction separated during step (b) and a fraction of solvent phase which is recycled to step (c),
the regeneration steps (b) and (d) being carried out in different zones.

2. A treatment method as claimed in claim 1, characterised in that a second mixture of solvent phase is used which contains the same polar solvent as that contained in the first mixture used during step (a).

3. A method as claimed in claim 1, characterised in that the water content of the second fraction of solvent phase is at least equal to the water content of said first fraction of solvent phase.

4. A method as claimed in one of the preceding claims, characterised in that step (b) is carried out at an intermediate pressure between the pressure at which step (a) is carried out and the pressure at which step (d) is carried out.

5. A method as claimed in one of the preceding claims, characterised in that the second fraction of solvent phase is regenerated during step (d) by a process of simple expansion at a pressure below the pressure at which step (c) is carried out.

6. A method as claimed in one of the preceding claims, characterised in that the first and/or the second fraction of solvent phase is regenerated by a process of distillation at a pressure lower than the pressure at which step (c) is carried out.

7. A method as claimed in claim 6, characterised in that one of the fractions of solvent phase is regenerated by distillation accompanied by a simultaneous exchange of heat between said fraction of solvent phase which is gradually heated and the solvent phase obtained from said regeneration which is cooled as it is circulated in counter-flow with the solvent phase being regenerated.

8. A method as claimed in one of the preceding claims, characterised in that the second fraction of solvent phase obtained from step (c) is subjected to an intermediate regeneration step by expansion, producing a gaseous phase rich in hydrocarbons during step (c), before being delivered to step (d).

9. A method as claimed in one of the preceding claims, characterised in that the first fraction of solvent phase obtained from step (a) is subjected to a regeneration step at an intermediate pressure between the pressure at which step (a) is carried out and the pressure at which step (b) is carried out, producing a gaseous fraction rich in hydrocarbons.

10. A method as claimed in one of the preceding claims, characterised in that the first and the second gaseous fractions obtained respectively from step (c) and step (b) are compressed and recycled to step (a).

11. A method as claimed in one of the preceding claims, characterised in that the gaseous fraction obtained from step (b) is compressed before being fed to step (c).

12. A treatment method as claimed in one of the preceding claims, characterised in that the treated gas contains at least one acid gas selected from among carbon dioxide or hydrogen sulphide.

13. A method as claimed in one of the preceding claims, characterised in that the treated gas contains at least carbon dioxide and hydrogen sulphide and in that the flow of the second fraction of solvent phase is kept at a value high enough to obtain, at the output of step (c), a gaseous fraction from which the hydrogen sulphide has been substantially removed and low enough to maintain a relatively high concentration of carbon dioxide in said gaseous fraction, the gaseous fraction obtained from step (d) having a high concentration of hydrogen sulphide.

14. A method as claimed in one of the preceding claims, characterised in that the polar solvent used during steps (a) and (c) is selected from among methanol, an alcohol or an ether, a polyethylene glycol ether and propylene carbonate.

15. A method as claimed in one of the preceding claims, characterised in that the polar solvent used during steps (a) and (c) contains at least two polar solvents.

16. A method as claimed in one of the preceding claims, characterised in that the polar solvent used during steps (a) and (c) contains a polar solvent and an amine.

17. A method as claimed in one- of the preceding claims, characterised in that the water content of the first fraction of solvent phase is preferably at least 10% of the fraction by volume.

18. A method as claimed in one of the preceding claims, characterised in that the water content of the second fraction of solvent phase is higher than the water content of the first fraction of solvent phase, preferably at least 30%.

19. A method as claimed in one of the preceding claims, characterised in that the gas is cooled in the presence of polar solvent before being moved on to step (a) producing a gaseous phase which is fed to step (a), a liquid phase rich in hydrocarbons and an aqueous liquid phase rich in solvent.

20. A method as claimed in one of the preceding claims, characterised in that the water is separated from the polar solvent by counter-flow contact with at least one fraction of treated gas.

21. A method as claimed in one of the preceding claims, characterised in that the gas contains at least one fraction of liquid hydrocarbon (LPG), said fraction being sent to a methane removal step during which the pressure is reduced and/or the temperature raised, followed by an ethane removal step during which the residual methane, ethane and residual acid gases contained in said liquid hydrocarbon phase are at least partially separated.

22. A method as claimed in one of the preceding claims, characterised in that step (a) is carried out at a pressure ranging between 1 and 20 MPa.

23. A method as claimed in one of the preceding claims, characterised in that step (a) is carried out at a temperature ranging between +5 and -50°C.

24. A method as claimed in one of the preceding claims, characterised in that step (c) is carried out at a pressure ranging between 0.4 and 2 MPa.

25. A method as claimed in one of the preceding claims, characterised in that at least one of the fractions of solvent phase mixture used during steps (a) and (c) is regenerated by distillation accompanied by an exchange of heat in a vertical plate exchanger having alternating passages in which counter-flow contact is made between the liquid phase and the vapour phase generated during the distillation process on the one hand and in which the solvent phase obtained during this regeneration flows on the other, this latter being cooled by the solvent phase during the regeneration process as it is circulated in counter-flow.

26. A method as claimed in one of the preceding claims, characterised in that the expansion energy from the one or the two fractions of solvent phase mixture is converted into mechanical energy by a turbine.

## Patentansprüche

1. Verfahren zum Behandeln eines Gases, das mindestens einen Kohlenwasserstoff und mindestens ein saures Gas enthält, um das saure Gas mindestens zum Teil aus dem Gas zu entfernen und mindestens ein konzentriertes saures Gas herzustellen, dadurch gekennzeichnet, daß es mindestens die folgenden Stufen umfaßt:
(a) Abkühlen und Kontaktieren des Gases bei einer Temperatur ≤ Umgebungstemperatur mit einer ersten Lösungsmittelphasen-Mischung, die mindestens ein polares physikalisches Lösungsmittel und Wasser enthält, unter Bildung einer ersten Lösungsmittelphasen-Fraktion, die reich an sauren Gasen ist und die gelösten Kohlenwasserstoffe enthält, und einer an sauren Gasen verarmten Gasfraktion,
(b) Regenerieren der ersten, an sauren Gasen reichen Lösungsmittelphasen-Fraktion, wie sie in der Stufe (a) erhalten wird, durch Herabsetzung des Druckes und/oder Erhöhung der Temperatur unter Bildung einer gasförmigen Fraktion, die reich an sauren Gasen ist und den Kohlenwasserstoff enthält, und einer Lösungsmittelphase, die an sauren Gasen verarmt ist und in die Stufe (a) zurückgeführt wird,
(c) Kontaktieren der an sauren Gasen reichen gasförmigen Fraktion, wie sie in der Stufe (b) erhalten wird, mit einer zweiten Lösungsmittelphasen-Mischung, die von der in der Stufe (a) verwendeten ersten Mischung verschieden ist, die mindestens ein polares, physikalisches Lösungsmittel und Wasser enthält, unter Bildung einer an Kohlenwasserstoff angereicherten gasförmigen Fraktion und einer zweiten Lösungsmittelphasen-Fraktion, die an sauren Gasen angereichert ist, und
(d) Regenerieren der genannten zweiten, an sauren Gasen angereicherten Lösungsmittelphasen-Fraktion, wie sie in der Stufe (c) erhalten wird, durch Herabsetzung des Druckes und/oder Erhöhung der Temperatur unter Bildung einer gasförmigen Fraktion, die konzentrierter an sauren Gasen ist als die während der Stufe (b) abgetrennte gasförmige Fraktion, und einer Lösungsmittelphasen-Fraktion, die in die Stufe (c) zurückgeführt wird,
wobei die Regenerierungsstufen (b) und (d) in verschiedenen Zonen durchgeführt werden.

2. Verfahren nach Anspruch 1, dadurch gekennzeichnet, daß man eine zweite Lösungsmittelphasen-Mischung verwendet, die das gleiche polare Lösungsmittel enthält, wie es in der in der Stufe (a) verwendeten ersten Mischung enthalten ist.

3. Verfahren nach Anspruch 1, dadurch gekennzeichnet, daß der Wassergehalt der genannten zweiten Lösungsmittelphasen-Fraktion mindestens gleich dem Wassergehalt der genannten ersten Lösungsmittelphasen-Fraktion ist.

4. Verfahren nach einem der vorhergehenden Ansprüche, dadurch gekennzeichnet, daß die Stufe (b) durchgeführt wird bei einem Druck zwischen dem Druck, bei dem die Stufe (a) durchgeführt wird, und dem Druck, bei dem die Stufe (d) durchgeführt wird.

5. Verfahren nach einem der vorhergehenden Ansprüche, dadurch gekennzeichnet, daß die zweite Lösungsmittelphasen-Fraktion in der Stufe (d) durch einfaches Entspannen auf einen Druck unterhalb des Druckes, bei dem die Stufe (c) durchgeführt wird, regeneriert wird.

6. Verfahren nach einem der vorhergehenden Ansprüche, dadurch gekennzeichnet, daß die erste und/oder die zweite Lösungsmittelphasen-Fraktion unter Anwendung eines Destillationsverfahrens bei einem Druck unterhalb des Druckes, bei dem die Stufe (c) durchgeführt wird, regeneriert wird (werden).

7. Verfahren nach Anspruch 6, dadurch gekennzeichnet, daß die Regenerierung einer der Lösungsmittelphasen-Fraktionen durchgeführt wird durch Destillation unter gleichzeitigem Wärmeaustausch zwischen der genannten Lösungsmittelphasen-Fraktion, die fortschreitend erwärmt wird, und der Lösungsmittelphase, die bei der genannten Regenerierung erhalten wird, die abgekühlt wird durch Zirkulation der Lösungsmittelphase, die regeneriert wird, im Gegenstrom.

8. Verfahren nach einem der vorhergehenden Ansprüche, dadurch gekennzeichnet, daß die zweite Lösungsmittelphasen-Fraktion am Ende der Stufe (c) einer Zwischen-Regenerierung unterworfen wird durch Entspannen unter Bildung einer an Kohlenwasserstoffen reichen gasförmigen Phase im Verlaufe der Stufe (c), bevor sie in die Stufe (d) eingeführt wird.

9. Verfahren nach einem der vorhergehenden Ansprüche, dadurch gekennzeichnet, daß die erste Lösungsmittelphasen-Fraktion, wie sie in der Stufe (a) erhalten wird, einer Regenerierung unterworfen wird bei einem Druck zwischen dem Druck, bei dem die Stufe (a) durchgeführt wird, und dem Druck, bei dem die Stufe (b) durchgeführt wird, unter Bildung einer an Kohlenwasserstoffen reichen gasförmigen Fraktion.

10. Verfahren nach einem der vorhergehenden Ansprüche, dadurch gekennzeichnet, daß die ersten und zweiten gasförmigen Fraktionen, die jeweils in der Stufe (c) und in der Stufe (b) erhalten werden, komprimiert und in die Stufe (a) zurückgeführt werden.

11. Verfahren nach einem der vorhergehenden Ansprüche, dadurch gekennzeichnet, daß die in der Stufe (b) erhaltene gasförmige Fraktion komprimiert wird, bevor sie in die Stufe (c) eingeführt wird.

12. Verfahren nach einem der vorhergehenden Ansprüche, dadurch gekennzeichnet, daß das behandelte Gas mindestens ein saures Gas umfaßt, das ausgewählt wird aus Kohlendioxid und Schwefelwasserstoff.

13. Verfahren nach einem der vorhergehenden Ansprüche, dadurch gekennzeichnet, daß das behandelte Gas mindestens Kohlendioxid und Schwefelwasserstoff enthält und daß man die Durchsatzmenge der zweiten Lösungsmittelphasen-Fraktion bei einem ausreichend hohen Wert hält, um am Ende der Stufe (c) eine gasförmige Fraktion zu erhalten, die im wesentlichen frei von Schwefelwasserstoff ist, und bei einem ausreichend niedrigen Wert hält, um in der genannten gasförmigen Fraktion eine verhältnismäßig hohe Konzentration an Kohlendioxid aufrechtzuerhalten, wobei die in der Stufe (d) erhaltene gasförmige Fraktion konzentriert an Schwefelwasserstoff ist.

14. Verfahren nach einem der vorhergehenden Ansprüche, dadurch gekennzeichnet, daß das in den Stufen (a) und (c) verwendete polare Lösungsmittel ausgewählt wird aus Methanol, einem Alkohol oder einem Ether, einem Polyethylenglycolether und Propylencarbonat.

15. Verfahren nach einem der vorhergehenden Ansprüche, dadurch gekennzeichnet, daß das in den Stufen (a) und (c) verwendete polare Lösungsmittel mindestens zwei polare Lösungsmittel umfaßt.

16. Verfahren nach einem der vorhergehenden Ansprüche, dadurch gekennzeichnet, daß das in den Stufen (a) und (c) verwendete polare Lösungsmittel ein polares Lösungsmittel und ein Amin umfaßt.

17. Verfahren nach einem der vorhergehenden Ansprüche, dadurch gekennzeichnet, daß der Wassergehalt der ersten Lösungsmittelphasen-Fraktion vorzugsweise mindestens 10 Massenprozent der Fraktion beträgt.

18. Verfahren nach einem der vorhergehenden Ansprüche, dadurch gekennzeichnet, daß der Wassergehalt der zweiten Lösungsmittelphasen-Fraktion vorzugsweise um mindestens 30 % höher ist als der Wassergehalt der ersten Lösungsmittelphasen-Fraktion.

19. Verfahren nach einem der vorhergehenden Ansprüche, dadurch gekennzeichnet, daß das Gas in Gegenwart des polaren Lösungsmittels abgekühlt wird, bevor es in die Stufe (a) eingeführt wird, unter Bildung einer gasförmigen Phase, die in die Stufe (a) eingeführt wird, einer an Kohlenwasserstoffen reichen flüssigen Phase und einer an Lösungsmittel reichen wäßrigen flüssigen Phase.

20. Verfahren nach einem der vorhergehenden Ansprüche, dadurch gekennzeichnet, daß das Wasser von dem polaren Lösungsmittel abgetrennt wird durch Kontaktieren im Gegenstrom mit mindestens einer Fraktion des behandelten Gases.

21. Verfahren nach einem der vorhergehenden Ansprüche, dadurch gekennzeichnet, daß das Gas mindestens eine flüssige Kohlenwasserstoff-Fraktion (GPL) enthält, die in eine Methan-Entfernungsstufe eingeführt wird durch Herabsetzung des Druckes und/oder Erhöhung der Temperatur und dann in eine Ethan-Entfernungsstufe eingeführt wird, in deren Verlauf das restliche Methan, das Ethan sowie die in der genannten flüssigen Kohlenwasserstoffphase vorhandenen sauren Gase mindestens teilweise abgetrennt werden.

22. Verfahren nach einem der vorhergehenden Ansprüche, dadurch gekennzeichnet, daß die Stufe (a) bei einem Druck zwischen 1 und 20 MPa durchgeführt wird.

23. Verfahren nach einem der vorhergehenden Ansprüche, dadurch gekennzeichnet, daß die Stufe (a) bei einer Temperatur zwischen +5 und -50°C durchgeführt wird.

24. Verfahren nach einem der vorhergehenden Ansprüche, dadurch gekennzeichnet, daß die Stufe (c) bei einem Druck zwischen 0,4 und 2 MPa durchgeführt wird.

25. Verfahren nach einem der vorhergehenden Ansprüche, dadurch gekennzeichnet, daß mindestens eine der in den Stufen (a) und (c) verwendeten Lösungsmittelphasen-Mischungsfraktionen regeneriert wird durch Destillation unter Wärmeaustausch in einem vertikalen Plattenaustaucher, der alternierende Durchgänge aufweist, in denen einerseits der Gegenstromkontakt zwischen der flüssigen Phase und der im Verlaufe des Destillationsprozesses gebildeten Dampfphase (Gasphase) hergestellt wird, und in denen andererseits die bei der genannten Regenerierung erhaltene Lösungsmittelphase strömt, die durch Zirkulation im Gegenstrom zur Lösungsmittelphase während der Regenerierung abgekühlt wird.

26. Verfahren nach einem der vorhergehenden Ansprüche, dadurch gekennzeichnet, daß die Entspannungsenergie der einen oder der beiden Lösungsmittelphasen-Mischungsfraktionen mittels einer Turbine in mechanische Energie umgewandelt wird.
